# EUROPEAN PATENT APPLICATION

(11) **EP 2 006 253 A1**
(43) Date of publication of application: **24.12.2008**
(21) Application number: 08200001.9
(22) Date of filing: 14.01.2008
(51) Int. Cl.: C02F 1/72, C02F 1/32

(54) **Photocatalytic fluid treatment apparatus**

(30) Priority: 18.01.2007 GB 0700903
(71) Applicant: GB Environmental Limited, Widford Ind. Estate Chelmsford Essex CM1 3AE (GB)
(72) Inventor: Snowball, Malcolm, Epping, Essex CM16 6TW (GB)
(74) Representative: Evans, Huw David Duncan

(57) **Abstract**

A fluid treatment apparatus comprises a fluid inlet 10, a fluid outlet 11, a treatment chamber 12 disposed between the fluid inlet 10 and fluid outlet 11, a plurality of plate members 13 mounted in the treatment chamber 12, the plane of the plate members being orientated substantially in line with the direction of fluid flow through the chamber between the inlet 10 and the outlet, the plates 13 having at least one major surface comprising a photo catalyst, means 17 being provided for irradiating the photo catalytic surfaces with an activating radiation. In use the plates 13 are rotated and the fluid is forced to flow between portions of the plates which are rotating against the direction of fluid flow. The rotation ensures that the photo catalytic surfaces of the plates 13 are fully exposed to the activating radiation and also causes a turbulent fluid flow between the plates 13 to ensure that any molecules in the fluid flow come into contact with the activated photo catalytic surfaces.

## Description

This invention relates to fluid treatment apparatus more particularly to fluid treatment apparatus for the removal or reduction of pollutants in effluents and water.

The bond breaking effects of photo catalysts are well documented and is in the public domain especially Titanium Dioxide which also has the added advantage as being biologically safe for humans. When titanium dioxide (TiO₂) is irradiated with light having a wavelength 385nm or shorter or any electromagnetic radiation whose radiation is shorter than 385nm, its surface becomes highly activated and, in the presence of water and oxygen, produces Hydroxyls, Oxygen Free Radicals, and Hydroperoxyl species together with a range of reactive oxygen species. These elements are highly reactive and will oxidise and break down complex molecules.

It is known to use photo catalysts to remove chemical or other pollutants, such as pesticides and oestrogens use from drinking water by breaking down their complex molecules to harmless base elements. Hitherto, known techniques have proved to be impractical for one or more of the following reasons:
1) Large surface area of photo catalyst presented to the fluid but with high pressure drop across the system requiring high energy to overcome the pressure drop.
2) Large surface area of photo catalyst presented to the fluid but imposed a filtering action on the fluid which made the system prone to fouling, requiring manual intervention to clean the system as well as requiring high energy to overcome the high pressure drop.
3) Large surface area of photo catalyst presented to the fluid in the form of powdered TiO₂ which required a filter to retrieve the TiO₂ powder after the catalytic action and before the fluid left the reaction chamber which created high pressure drop across the system.
4) TiO₂ coated propellers rotationally pumping the fluid through a reaction chamber which creates low reaction times and cavitation damage in the supply pumps or if rotated in reverse to the fluid flow to create more reaction time, created an unacceptable pressure drop across the system.

The best solution is to have, a large surface area of photo catalyst exposed to the fluid with high turbulence and a very low pressure drop, structured such that it imposes little or no pumping or filtering effect to the fluid and importantly resists fouling from debris in the fluid.

Titanium Dioxide in activated powder form has been used in laboratory experiments to kill micro-organisms and to remove pollutants from water. The technique, while of interest, is unpredictable and impracticable. To provide an efficient consistent and practical process, the TiO₂ powder must present a large activated surface area and remain in suspension the reaction chamber while the water is continuously flowing through it and be irradiated with light of the appropriate wavelength the whole time. This has proved to be impossible to achieve as the powder is carried out of the chamber by the water flow. However, if the process is a batch process whereby the water does not flow through the chamber but remains in the chamber and is treated by adding the TiO₂ powder and then activating it, there remains the problem of removing the TiO₂ powder after treatment.

A further problem that adds to the unpredictability of the technique is that of the particles of TiO₂ shading each other from the light and hence becoming deactivated. Previous attempts to provide a solution to these problems involved many variations of wrapping TiO₂ coated multi wound gauze around a lamp and simultaneously passing the liquid to be treated through the irradiated gauze. Unfortunately this is self-defeating as the surface area of the TiO₂ undoubtedly goes up but is negated by the large amount of shading of the TiO₂ gauze construction. A major fault of this technique is the fact that the gauze acts like a filter and gathers debris from the treated liquid curtailing its useful life and requiring frequent cleaning. This technique also significantly increases the insertion loss of the device (significant increase in pressure drop across the device).

Attempts have been made involving ceramic filters whose surface and pores are coated with TiO₂ and whose surface is then illuminated to activate the TiO₂. This technique is ineffective because of depth shading and high insertion loss.

Attempts have also been made using rotating propellers coated with TiO₂ inside a reaction chamber, all proved ineffective due to imparting a pumping action (decreasing the dwell time in the reaction chamber and hence insufficient reaction time) or unacceptable insertion loss problems caused by rotating the propellers against the fluid flow (reverse pumping) together with an inability to provide enough TiO₂ surface area in contact with the liquid for satisfactory pollution removal at standard water treatment flows.

I have now devised a fluid treatment apparatus which alleviates the above-mentioned problems.

In accordance with this invention, there is provided a fluid treatment apparatus comprising a fluid inlet, a fluid outlet, a treatment chamber disposed between the fluid inlet and fluid outlet, a plurality of plate members mounted in the treatment chamber, the plane of the plate members being orientated substantially in line with the direction of fluid flow through said chamber between said inlet and said outlet, said plates having at least one major surface comprising a photo catalyst, means being provided for irradiating said photo catalytic surfaces with an activating radiation.

In use, the fluid flow is forced between the plate members and any molecules contained in the fluid flow will thus come into contact with the activated photo catalyst thereon.

Preferably means are provided for rotating the plate members in said chamber, in order to ensure that the photo catalytic surfaces thereof are fully exposed said activating radiation.

Said photo catalyst may extend fully or partially over the or each major surface.

Preferably the irradiating means is arranged to irradiate the photo catalytic surfaces with light having a wavelength of 385nm or less.

Preferably the photo catalyst comprises titanium dioxide. This has the added advantage of being a non-stick material which is resistant to the adherence of contaminants such as slime and dirt in the fluid. The action of the fluid flow also creates a scrubbing effect which cleans the surface and keeps it free of contaminants.

Preferably the plate members are substantially circular and preferably comprise discs.

Preferably the chamber is substantially circular in section, the axis of rotation of the plate members extending axially of the chamber.

Preferably the plate members comprise opposite major surfaces each comprising said photo catalyst.

In one embodiment, all of the plate members may rotate about a common axis.

In an alternative embodiment, the apparatus may comprise a plurality of groups of plate members, the rotational axis of each group being offset from the rotational axis of the or each other group. In this embodiment, the plate members of adjacent groups may be interleaved. Also the plate members of one or more groups may rotate in an opposite sense to the plate members of the or each other group.

Preferably a baffle extends between the plate members to direct said fluid past portions of the plate members which are rotating against the fluid flow between said inlet and said outlet, the baffle preferably serving to block fluid from flowing past a portion of the plate members which are rotating with the fluid flow. This contra-rotation of the plate members against the fluid flow serves to cause a turbulent fluid flow between the plate members and ensures that any molecules in the fluid flow come into contact with the photo catalytic surfaces.

Preferably the baffle extends radially inwardly towards the axis of rotation of the plate members.

Preferably the baffle comprises bristles or fingers which extend between the plate members.

The irradiating means may be positioned radially outwardly of the plate members at one or more positions around the circumference thereof. Alternatively the irradiating means may be positioned along the axis of the plate members.

Means may be provided between the plate members for channelling or directing the radiation on to said photo catalytic surfaces of the plate members. Said channelling member may comprise a disc or other member which reflects the radiation.

In an alternative embodiment, said irradiating means may be disposed between said plate members. The irradiating means may be activated by irradiating it with a different form of radiation. In one embodiment said irradiating means may comprise a mercury arc discharge lamp which emits light below 385nm, the lamp being activated by irradiating it with microwave radiation.

In an alternative embodiment, said irradiating means may actually form said plates, the irradiating means being coated on or both major surfaces with said photo catalyst, such that the inner face of the coating is irradiated. Apertures may be provided in the coating to allow the radiation to irradiate the photo catalyst on adjacent plates. The irradiating means may be activated by irradiating it with a different form of radiation.

Means may be provided for introducing a gas such as oxygen into the chamber to increase the oxidising action of the photo catalyst.

Embodiments of this invention will now be described by way of examples only and with reference to the accompanying drawings, in which:
Figure 1 is a plan view of a first embodiment of water treatment apparatus in accordance with this invention, with some parts being shown cut away;
Figure 2 is a sectional view along the line II-II of Figure 1;
Figure 3 is a perspective side view of the apparatus of Figure 1, with some parts being shown in outline;
Figure 4 is a plan view of three plates of the apparatus of Figure 1, illustrating how the water flows in relation to the direction of the plates;
Figure 5 is a plan view of two plates of a second embodiment of water treatment apparatus in accordance with this invention;
Figure 6 is a plan view of two plates of a third embodiment of water treatment apparatus in accordance with this invention; and
Figure 7 is a sectional view through a fourth embodiment of water treatment apparatus in accordance with this invention.

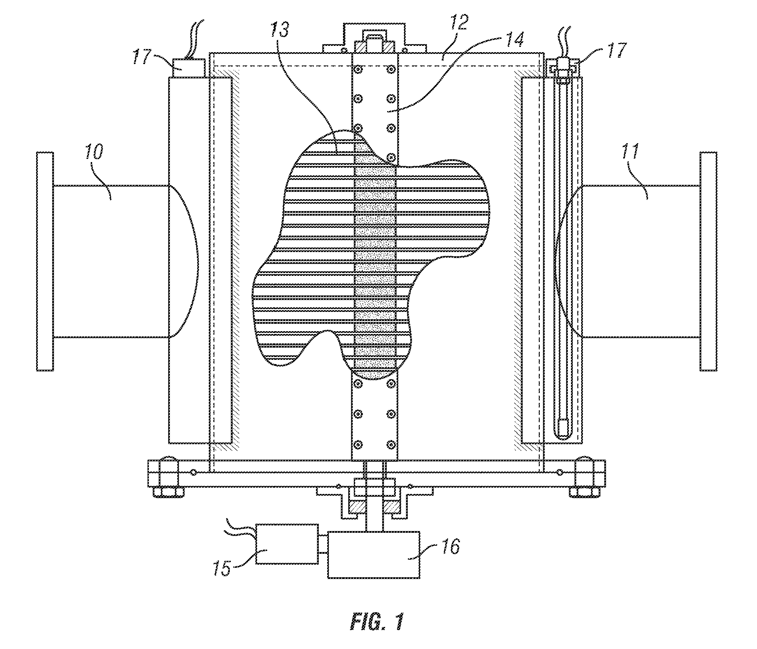

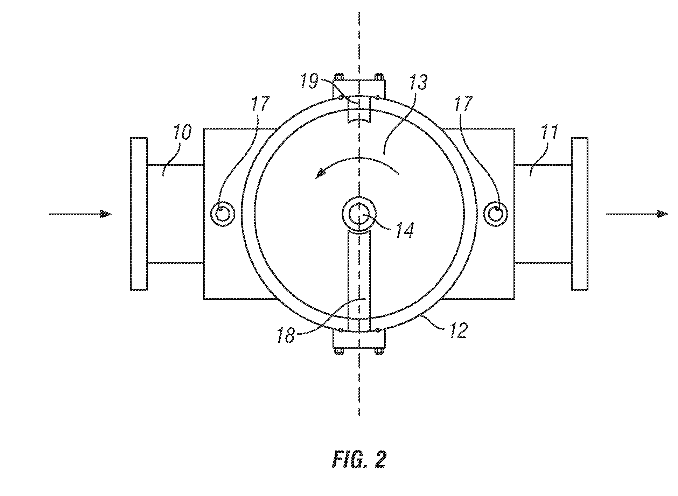

Referring to Figures 1 and 2 of the drawings, there is shown a water treatment apparatus comprising a flanged fluid inlet duct 10 and a flanged fluid outlet duct 11 extending at diametrically opposed positions from the tubular side walls of a circular-section fluid treatment chamber 12. A plurality of circular plates 13 are mounted side-by-side inside the chamber 12 on an axle 14, which extends axially of the chamber 12.

A baffle 18 comprising a plurality of elongate fingers extends from the inner surface of the tubular side wall of the chamber 12, the fingers respectively extending between adjacent plates 13 and terminating in close proximity to the axle 14. The baffle 18 is positioned on the tubular side wall, such that the fingers thereof extend perpendicular to the longitudinal axis of the fluid inlet and fluid outlet ducts 10, 11. A second smaller baffle 19 having shorter fingers is disposed diametrically opposite the baffle 18.

A pair of parallel elongate ultra violet lamps 17 are disposed at diametrically opposed positions on the side wall of the chamber 12, the lamps 17 extending longitudinally of the chamber 12. The lamps 17 preferably extend across the inlet and outlet ducts 10, 11 and extend the full length of the chamber 12, parallel to the axle 14. The axle 14 is rotated about its longitudinal axis by a motor 15, which is connected to the axle 14 by a gearbox 16.

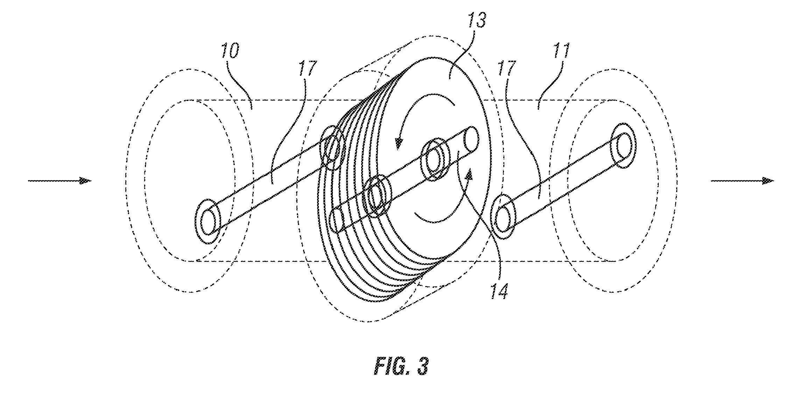

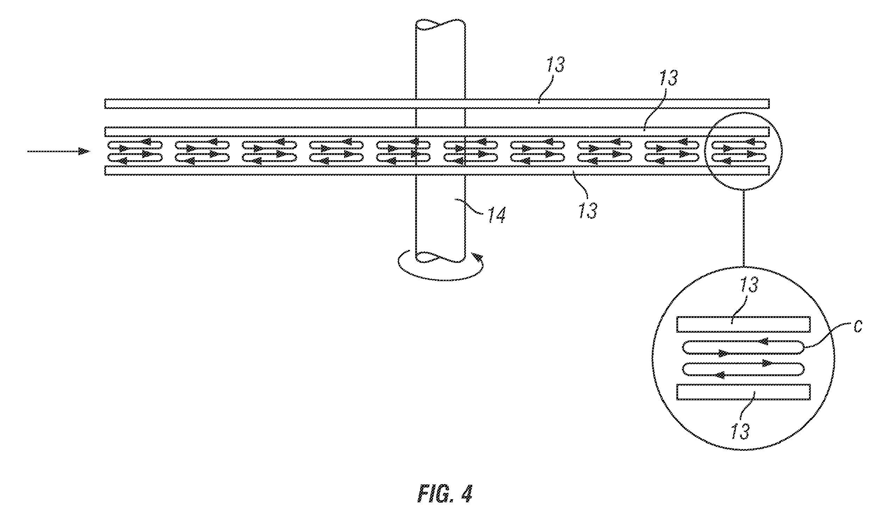

Referring to figures 3 and 4 of the drawings, in use, the water to be treated flows into the apparatus through the inlet duct 10 and into the chamber 12. The water then flows between the plates 13, which each have their planes lying in line with the direction of water flow. The baffle 18 prevents water from flowing past the lower half of the plates 13 as shown in the drawings. The cross sectional area of the flow path past the plates 13 is preferably equal to the cross sectional area of the inlet or outlet ducts 10,11, in order to minimise pressure drop. The axle 14 is rotated such that the upper halves of the plates 13 rotate against the direction of water flow. The smaller baffle 19 seals the gap at the top of the chamber 12 between its side wall and the edges of the plates, so as to ensure that no water can by-pass the plates 13.

The rotation of the plates 13 against the flow causes small circulating currents C to be generated between the plates 13, which help to ensure that any molecules of pollutants or chemicals within the flow are brought into contact with the surfaces of the plates 13, which are each coated with a TiO₂ photo catalyst of preferably anatase form.

The ultra violet lamp 17 irradiates the plates 13 from opposite sides thereof and activates the TiO₂ photo catalyst. Only the TiO₂ within close proximity to the lamp 17 may receive a high dose of radiation, particularly if the water is cloudy or turbid and attenuates the light. However, the speed of rotation of the plates 13 ensures that the whole surface of the plates 13 remains activated over at least a half revolution. The activated TiO₂ photo catalyst oxidises and breaks down any pollutant molecules in the water rendering them harmless.

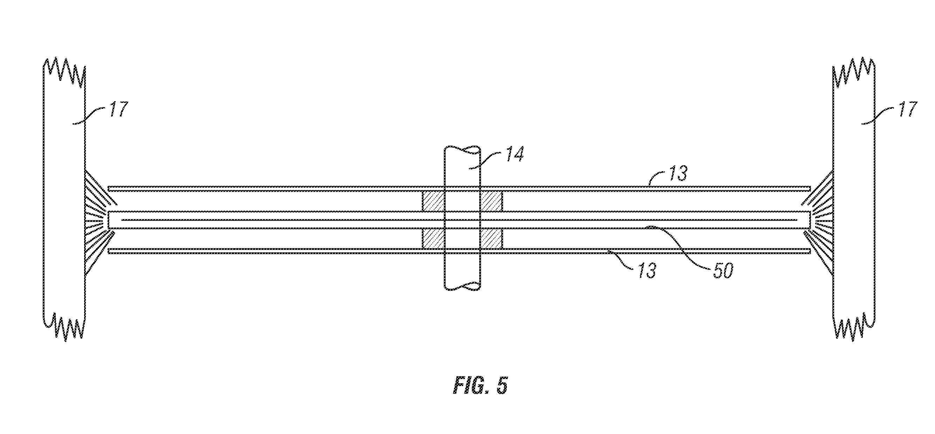

Referring to Figure 5 of the drawings, there is shown an alternative embodiment of water treatment apparatus in accordance with this invention and like parts are given like reference numerals. In this embodiment, an optically conductive disc 50 is disposed between each plate 13 and at each end of the axle 14. The discs 50 are formed of a material which transmits the irradiated ultra violet light radially inwardly and scatters it axially outwardly, thereby distributing the ultra violet light over the entire surfaces of the plates 13.

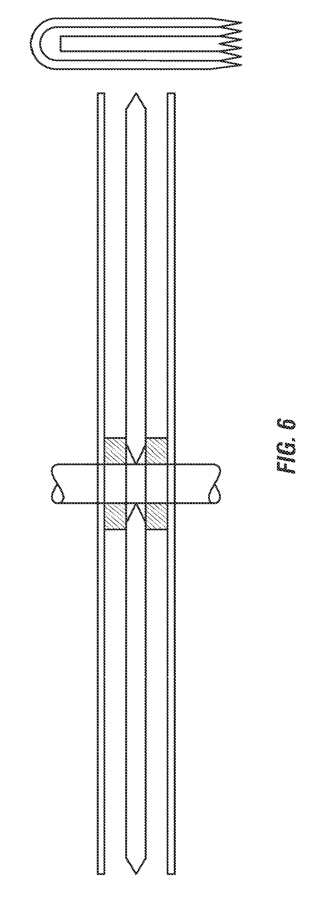

Referring to Figure 6 of the drawings, there is shown an alternative embodiment of water treatment apparatus in accordance with this invention and like parts are given like reference numerals. In this embodiment, the discs 50 of the previous embodiment are replaced by disc-shaped mercury arc lamps 60 which emit light below 385nm when activated by radiation from a device such as a microwave generator 61 located in place of the or each lamp 17.

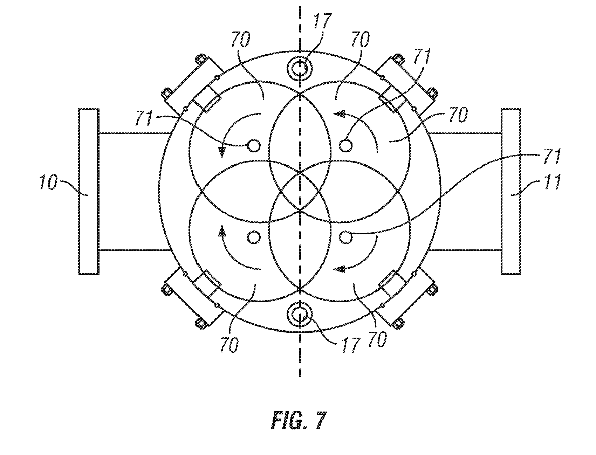

Referring to Figure 7 of the drawings, there is shown an alternative embodiment of water treatment apparatus in accordance with this invention and like parts are given like reference numerals. In this embodiment, a plurality of groups of smaller plates 70 are arranged on respective parallel axles 71, which extend axially of the chamber 12. The plates 70 of each group are interleaved with the plates 70 of adjacent groups. The axles 71 disposed in the upper and lower halves of the chamber 12 are rotated in opposite senses, so that all of the plates 70 are rotating against the direction of water flow and the need for the baffle is avoided.

A fluid treatment apparatus in accordance with the present invention is relatively simple and inexpensive in construction, yet is reliably able to remove chemical or other pollutants from water by breaking down their complex molecules to harmless base elements.

## Claims

1. Fluid treatment apparatus comprising a fluid inlet, a fluid outlet, a treatment chamber disposed between the fluid inlet and fluid outlet, a plurality of plate members mounted in the treatment chamber, the plane of the plate members being orientated substantially in line with the direction of fluid flow through said chamber between said inlet and said outlet, said plates having at least one major surface comprising a photo catalyst, means being provided for irradiating said photo catalytic surfaces with an activating radiation.

2. Fluid treatment apparatus as claimed in claim 1, comprising means for rotating the plate members in said chamber.

3. Fluid treatment apparatus as claimed in claim 2, in which all of the plate members rotate about a common axis.

4. Fluid treatment apparatus as claimed in claim 3, in which the chamber is substantially circular in section, the axis of rotation of the plate members extending axially of the chamber.

5. Fluid treatment apparatus as claimed in claim 2, in which the apparatus comprises a plurality of groups of plate members, the rotational axis of each group being offset from the rotational axis of the or each other group.

6. Fluid treatment apparatus as claimed in claim 5, in which the plate members of adjacent groups are interleaved.

7. Fluid treatment apparatus as claimed in claims 5 or 6, in which the plate members of one or more groups may rotate in an opposite sense to the plate members of the or each other group.

8. Fluid treatment apparatus as claimed in any of claims 2 to 7, in which a baffle extends between the plate members to direct said fluid past portions of the plate members which are rotating against the fluid flow between said inlet and said outlet, the baffle serving to block fluid from flowing past a portion of the plate members which are rotating with the fluid flow.

9. Fluid treatment apparatus as claimed in claim 8, in which the baffle extends radially inwardly towards the axis of rotation of the plate members.

10. Fluid treatment apparatus as claimed in claims 8 or 9, in which the baffle comprises bristles or fingers which extend between the plate members.

11. Fluid treatment apparatus as claimed in any preceding claim, in which said photo catalyst extends fully over the or each major surface.

12. Fluid treatment apparatus as claimed in any of claims 1 to 10, in which said photo catalyst extends partially over the or each major surface.

13. Fluid treatment apparatus as claimed in any preceding claim, in which said irradiating means is arranged to irradiate the photo catalytic surfaces with light having a wavelength of 385nm or less.

14. Fluid treatment apparatus as claimed in any preceding claim, in which the photo catalyst comprises titanium dioxide.

15. Fluid treatment apparatus as claimed in any preceding claim, in which the plate members are substantially circular.

16. Fluid treatment apparatus as claimed in claim 15, in which the plate members comprise discs.

17. Fluid treatment apparatus as claimed in any preceding claim, in which the plate members comprise opposite major surfaces each comprising said photo catalyst.

18. Fluid treatment apparatus as claimed in any preceding claim, in which the irradiating means is positioned outwardly of the plate members at one or more positions around the periphery thereof.

19. Fluid treatment apparatus as claimed in any of claims 1 to 18, in which the irradiating extends through the plate members.

20. Fluid treatment apparatus as claimed in any preceding claim, comprising means between the plate members for channelling or directing the radiation on to said photo catalytic surfaces of the plate members.

21. Fluid treatment apparatus as claimed in claim 20, in which said channelling member comprises a disc or other member which reflects the radiation.

22. Fluid treatment apparatus as claimed in any of claims 1 to 18, in which the irradiating means is disposed between said plate members.

23. Fluid treatment apparatus as claimed in claim 22, in which the irradiating means is arranged to be activated by irradiating it with a different form of radiation emitted by an emitter.

24. Fluid treatment apparatus as claimed in claim 23, in which said irradiating means comprises a mercury arc discharge lamp which emits light below 385nm, the lamp being activated by irradiating it with microwave radiation emitted by said emitter.

25. Fluid treatment apparatus as claimed in any of claims 1 to 18, in which said irradiating means forms said plates, the irradiating means being coated on or both major surfaces with said photo catalyst, such that the inner face of the coating is irradiated.

26. Fluid treatment apparatus as claimed in claim 25, in which apertures are provided in the coating to allow the radiation to irradiate the photo catalyst on adjacent plates.

27. Fluid treatment apparatus as claimed in claim 26, in which the irradiating means is arranged to be activated by irradiating it with a different form of radiation emitted by an emitter.

28. Fluid treatment apparatus as claimed in any preceding claim, comprising means for introducing a gas into the chamber.
